# EUROPEAN PATENT SPECIFICATION

(11) **EP 4 415 004 B1**
(45) Date of publication and mention of the grant of the patent: **18.11.2026**
(21) Application number: 22878434.4
(22) Date of filing: 30.09.2022
(51) Int. Cl.: H01F 1/113, H01F 1/053, H01F 1/08, C08K 3/22, C08L 81/02

(54) **RESIN COMPOSITION FOR BONDED MAGNETS AND MOLDED BODY USING SAME**
HARZZUSAMMENSETZUNG FÜR GEBUNDENE MAGNETE UND FORMKÖRPER DAMIT
COMPOSITION DE RÉSINE POUR AIMANTS LIÉS ET CORPS MOULÉ CORRESPONDANT

(30) Priority: 05.10.2021 JP 2021163925
(43) Date of publication of application: 14.08.2024
(73) Proprietor: Toda Kogyo Corp., Hiroshima 732-0828 (JP)
(72) Inventor: SAKURAI, Hiromitsu, Otake-shi, Hiroshima 739-0652 (JP); HINO, Makoto, Otake-shi, Hiroshima 739-0652 (JP); SHIMOHATA, Yusuke, Otake-shi, Hiroshima 739-0652 (JP)
(74) Representative: Dennemeyer & Associates S.A.
(86) International application number: PCT/JP2022/036645
(87) International publication number: WO 2023/058565

(56) References cited:
- JP-A- 2002 080 715
- JP-A- 2003 142 309
- JP-A- 2009 152 354
- JP-A- 2010 518 182
- JP-A- 2017 212 308
- JP-A- H08 293 408
- US-A1- 2020 263 003

## Description

### TECHNICAL FIELD

The present disclosure relates to a resin composition for bonded magnets which is excellent in physical properties such as heat resistance, bending strength, and IZOD impact strength without decreasing magnetic properties and which can reduce generation of corrosive gas. The present disclosure also relates to a bonded magnet molded body using the resin composition.

### BACKGROUND ART

As is well known, bonded magnets are advantageous in that they are lighter than sintered magnets and have better dimensional accuracy. Further, there is an advantage that even a bonded magnet having a complicated shape can be easily massproduced. Therefore, bonded magnets are widely used in various applications such as toys, office equipment, acoustic equipment, and motors.

Known magnetic powders used for bonded magnets are rare earth magnet powders represented by an Nd-Fe-B base or ferrite particle powders. Rare earth magnet powders have high magnetic properties but are also expensive. Therefore, applications in which rare earth magnet powders can be used are limited. On the other hand, ferrite particle powders are inferior to rare earth magnet powders in terms of magnetic properties. However, ferrite particle powders are inexpensive and chemically stable. Therefore, ferrite particle powders are used in a wide range of applications.

In the production of bonded magnets, kneaded rubber or plastic material and magnetic powder are generally molded in a magnetic field or by a mechanical method.

In recent years, various materials and devices are required to have increased functionality including improvement in productivity and improvement in reliability at the time of use. Accordingly, bonded magnets used for these materials and devices are required to have increased performance including improvement in productivity, improvement in mechanical strength, and improvement in magnetic properties.

For example, in a vehicle or the like, bonded magnets are used as a rotor or a sensor. High heat resistance and mechanical strength are strongly required of bonded magnets to be used in order to prolong the life of the device and to use the device at high-speed rotation. Therefore, a bonded magnet using PPS resin as a binder resin is used. It is known that this bonded magnet has high heat resistance and can suppress a decrease in mechanical properties at high temperatures.

For example, Patent Literature 1 proposes that PPS resin and PA resin are mixed at a predetermined ratio, and Patent Literature 2 proposes that modified polyolefins and glass fiber are added to PPS resin. Both technologies intend to accordingly prepare a compound for bonded magnets which has high heat resistance and excellent mechanical strength and magnetic properties.

Patent Literature 3 proposes a resin composition for bonded magnets which include a phosphorus-based antioxidant in order to obtain a bonded magnet capable of suppressing a decrease in strength even when exposed to a high-temperature environment. JP H08 293408 A discloses a plastic magnetic material composition which is magnetized combining magnetic powder and a synthetic resin. The plastic magnetic material composition is characterized by the use as a synthetic resin polar functional group-modified propylene-based polymer (A).

### CITATION LIST

### PATENT LITERATURE

Patent Literature 1: JP-A-2013-77802
Patent Literature 2: JP-A-4-44304
Patent Literature 3: JP-A-2015-76572

### SUMMARY OF INVENTION

### PROBLEMS TO BE SOLVED BY INVENTION

However, in the bonded magnet using PPS resin, there are concerns that, for example, the number of times of maintenance of a mold increases in a production process, the life of a mold is shortened, and the bonded magnet deteriorates, under the influence of corrosive gas (Cl⁻ or SO₄²⁻) derived from PPS resin. Therefore, reduction of corrosive gas is strongly required.

Under such circumstances, a technical problem of the present disclosure is to obtain: a resin composition for bonded magnets which is excellent in physical properties such as heat resistance, bending strength, and IZOD impact strength without decreasing magnetic properties and which can reduce generation of corrosive gas; and a molded body using the resin composition for bonded magnets.

### SOLUTION TO PROBLEMS

The technical problem can be achieved by the following embodiments.

That is, a resin composition for bonded magnets according to a first embodiment includes a magnetic powder, a PPS resin, and a hydrotalcite powder and contains 0.1 to 25.0 wt% of hydrotalcite relative to the PPS resin.

A resin composition for bonded magnets according to a second embodiment is the resin composition for bonded magnets of the first embodiment which includes 5 to 30 wt% of the PPS resin.

A resin composition for bonded magnets according to a third embodiment is the resin composition for bonded magnets of the first or second embodiment which contains 0.01 to 4.0 wt% of the hydrotalcite.

A resin composition for bonded magnets according to a fourth embodiment is the resin composition for bonded magnets according to any of the first to third embodiments in which the hydrotalcite powder is an Mg-Al-based hydrotalcite.

A resin composition for bonded magnets according to a fifth embodiment is a molded body that is molded using the resin composition for bonded magnets of any of the first to fourth embodiments.

### EFFECTS OF INVENTION

According to the present embodiment, generation of corrosive gas can be reduced without decreasing Br (residual magnetic flux density). Moreover, a molded article obtained using the resin composition for bonded magnets according to the present embodiment has physical properties such as high bending strength and high IZOD impact strength. Therefore, this resin composition is suitably used for molding bonded magnets.

### DESCRIPTION OF EMBODIMENTS

Hereinafter, the present embodiment will be described in detail.

The resin composition for bonded magnets according to the present embodiment includes at least a magnetic powder, a PPS resin, and a hydrotalcite powder.

The magnetic powder used in the present embodiment is not particularly limited. Usually, magnetic powders usable for bonded magnets, such as ferrite particle powders or rare earth magnetic powders, can be used.

A preferred ferrite particle powder is a magnetoplumbite-type ferrite particle powder. Here, the magnetoplumbite-type ferrite particle powder is a barium ferrite particle powder, a strontium ferrite particle powder, a barium-strontium ferrite particle powder, or a particle powder that contains these ferrite particle powders and 0.1 to 7.0 mol% of one or more elements selected from Ti, Mn, Al, La, Zn, Bi, and Co, which is represented by the formula AO·nFe₂O₃ (where A is Ba, Sr, or Ba-Sr, n = 5.0 to 6.5).

The average particle diameter of the ferrite particle powder is preferably 1.0 to 5.0 µm and more preferably 1.0 to 2.0 µm. The BET specific surface area is preferably 1 to 10 m²/g and more preferably 1 to 5 m²/g. The coercive force iHc is preferably 119 to 557 kA/m (1500 to 7000 Oe) and more preferably 119 to 398 kA/m (1500 to 5000 Oe). The remanent magnetization is preferably 100 to 300 mT (1000 to 3000 G) and more preferably 100 to 200 mT (1000 to 2000 G).

The rare earth magnetic powder is an intermetallic compound that contains at least one rare earth element and at least one transition metal in constituent elements. Examples include rare earth-cobalt-based, rare earth-iron-boron-based, and rare earth-iron-nitrogen-based magnetic powders. In particular, when a rare earth-iron-boron-based magnetic powder or a rare earth-iron-nitrogen-based magnetic powder is used, a bonded magnet having excellent magnetic properties can be obtained.

The average particle diameter of the rare earth magnetic powder is preferably 1 to 120 µm and more preferably 1 to 80 µm. The BET specific surface area is preferably 0.5 to 5 m²/g and more preferably 0.5 to 3 m²/g. The coercive force iHc is preferably 239 to 1591 kA/m (3.0 to 20 kOe) and more preferably 318 to 1114 kA/m (4.0 to 15 kOe). The remanent magnetization is preferably 0.3 to 1.8 mT (3.0 to 18 kG) and more preferably 0.5 to 1.3 mT (5.0 to 13 kG).

It is noted that the Nd-Fe-B-based magnetic powder can be used as it is for kneading. However, when the Nd-Fe-B-based magnetic powder is a flaky powder, the flaky powder is desirably pulverized by a jet mill, an atomizer, a ball mill, or the like in order to obtain higher fluidity and magnetic properties. In this way, a flaky powder having an average particle diameter of 100 µm or less is obtained.

Examples of a soft ferrite particle powder include Mn-Zn ferrite, Ni-Zn ferrite, Ni-Zn-Cu ferrite, Mn-Mg ferrite, carbonyl iron powder, and sendust. The make-up of soft ferrite to be used can also be changed according to the frequency of the electromagnetic wave to be used.

The average particle diameter of the soft ferrite powder is preferably 1 to 150 µm and more preferably 1 to 50 µm.

Desirably, these magnetic powders are subjected to various surface treatments in order to suppress the deterioration of magnetic properties caused by oxidation, improve the compatibility with resin, and improve the strength of a molded article.

Examples of a material usable for the surface treatments include a silane-based coupling agent, a titanium-based coupling agent, an aluminum-based coupling agent, a siloxane polymer, an organic phosphoric acid-based surface treatment agent, and an inorganic phosphoric acid-based surface treatment agent. In particular, the strength of a molded article can be further improved by previously treating the surface of the magnetic powder with a silane-based coupling agent.

The hydrotalcite powder used in the present embodiment is a layered compound represented by the general formula: [M²⁺₁₋ₓM³⁺ₓ(OH)₂][Aⁿ⁻_{x/n}·mH₂O] (wherein M²⁺ represents a divalent metal ion such as Mg²⁺, Co²⁺, Ni²⁺, or Zn²⁺; M³⁺ represents a trivalent metal ion such as Al³⁺, Fe³⁺, or Cr³⁺; Aⁿ⁻ represents an interlayer anion such as OH⁻, Cl⁻, CO₃²⁻, or SO₄²⁻; x satisfies 0 < x < 1; n is a valence of A; and m satisfies 0 ≤ m < 1).

The hydrotalcite powder used in the present embodiment is preferably an Mg-Al-based hydrotalcite that contains Mg²⁺ as a divalent metal ion and Al³⁺ as a trivalent metal ion. Some or all of these metal ions may be substituted with other metal ions.

The hydrotalcite powder used in the present embodiment contains plate-shaped particles. The average plate surface diameter is 0.01 to 1.0 µm, preferably 0.02 to 0.8 µm, and more preferably 0.03 to 0.7 µm. When the average plate surface diameter is less than 0.01 µm, dispersibility in resin is insufficient. When it exceeds 1.0 µm, it is difficult to industrially produce plate-shaped particles.

The BET specific surface area of the hydrotalcite powder used in the present embodiment is preferably 1 to 150 m²/g, more preferably 5 to 100 m²/g, and still more preferably 8 to 50 m²/g. Hydrotalcite particles having a BET specific surface area of less than 1 m²/g are difficult to obtain industrially. When the BET specific surface area exceeds 150 m²/g, aggregation of particles becomes severe. As a result, it is difficult to uniformly disperse particles in resin.

In the hydrotalcite powder used in the present embodiment, the particle surface may be coated with at least one surface treatment agent selected from a higher fatty acid, an anionic surfactant, a higher fatty acid phosphate, a coupling agent, and a polyhydric alcohol esters as necessary. By coating with the surface coating material, the dispersibility of the hydrotalcite powder in resin improves.

The hydrotalcite powder used in the present embodiment can be produced by a conventional procedure. Examples include a method in which a mixture prepared by mixing a magnesium compound and an aluminum compound is first fired, and then the thus-obtained Mg-Al composite oxide is hydrated with an anion-containing aqueous solution. In another example, a hydrotalcite powder can be obtained by a method in which a calcium salt aqueous solution is first added to a mixed aqueous solution prepared by mixing an anion-containing alkaline aqueous solution, a magnesium salt aqueous solution, and an aluminum salt aqueous solution, and then the obtained calcium salt-containing aqueous solution is heated and aged.

The PPS resin used in the present embodiment is not particularly limited, but the average molecular weight is preferably 10,000 to 100,000. When a low-molecular-weight PPS resin, which has a low melt viscosity, is used, the moldability of a composition for injection molding is excellent, but physical properties such as strength may be poor. When a high molecular weight PPS resin, which has a high melt viscosity, is used, physical properties are rather excellent, but moldability may be poor when the filling amount of the magnetic powder is high.

In addition, the melt viscosity of the PPS resin can be appropriately set according to the magnetic powder. A preferred melt viscosity is in the range of 5 to 200 Pa·s at 310°C. When the melt viscosity at 310°C is less than 5 Pa·s, the mechanical strength of the resulting resin composition for bonded magnets may decrease. On the other hand, when the melt viscosity at 310°C exceeds 200 Pa·s, the fluidity of the resin composition for bonded magnets significantly decreases. Then, injection molding may be difficult.

The molecular structure of the PPS resin is not particularly limited. That is, the molecular structure may be of, for example, either a crosslinked type or a linear type. In addition, various elastomers such as rubber or elastic resin may be blended in the PPS resin as necessary.

The content of the hydrotalcite powder in the resin composition for bonded magnets according to the present embodiment is 0.1 to 25.0 wt% relative to the PPS resin. When the content of the hydrotalcite powder relative to the PPS resin is less than 0.1 wt%, the effect of reducing corrosive gas is not sufficient. When the content of the hydrotalcite powder relative to the PPS resin exceeds 25.0 wt%, mechanical physical properties, magnetic properties, and fluidity decrease. The content of the hydrotalcite powder relative to the PPS resin is more preferably 0.5 to 15.0 wt% and still more preferably 1.0 to 5.0 wt%.

The resin composition for bonded magnets according to the present embodiment preferably includes 0.01 to 4.0 wt% of the hydrotalcite powder. When the content of the hydrotalcite powder is less than 0.01 wt%, the effect of reducing corrosive gas is not sufficient. When the content of the hydrotalcite powder exceeds 4.0 wt%, a nonmagnetic component increases. As a result, mechanical physical properties, magnetic properties, and fluidity may decrease. The content of the hydrotalcite powder is preferably 0.10 to 2.5 wt% and more preferably 0.20 to 1.0 wt%.

The resin composition for bonded magnets according to the present embodiment preferably includes 5 to 30 wt% of the PPS resin. When the content of the PPS resin is less than 5 wt%, sufficient fluidity of the resin composition for bonded magnets may not be obtained. In this case, it is difficult to obtain a good molded article. When the content of the PPS resin exceeds 30 wt%, magnetic properties may decrease. The content of the PPS resin is more preferably 7 to 25 wt% and still more preferably 10 to 20 wt%.

The content of the magnetic powder in the resin composition for bonded magnets is preferably 69.65 to 94.53 wt%. When the content of the magnetic powder is less than 69.65 wt%, required magnetic properties may not be obtained. When the content of the magnetic powder exceeds 94.53 wt%, the mechanical strength of the obtained bonded magnet may decrease, and moldability such as fluidity or recyclability may extremely decrease. The content of the magnetic powder is more preferably 74.63 to 92.54 wt% and still more preferably 79.60 to 89.55 wt%.

When the ferrite particle powder is used as the magnetic powder, the residual magnetic flux density Br of the resin composition for bonded magnets according to the present embodiment is preferably 230 mT (2300 G) or more and more preferably 245 mT (2450 G) or more. The residual magnetic flux density Br can be determined by the later-described magnetism measurement method. The coercive force iHc is preferably 119 to 279 kA/m (1500 to 3500 Oe) and more preferably 127 to 259 kA/m (1600 to 3250 Oe). The maximum energy product (BH)max is preferably 10.3 kJ/m³ (1.30 MGOe) or more and more preferably 10.7 kJ/m³ (1.35 MGOe) or more.

When the rare earth magnetic powder is used as the magnetic powder, the residual magnetic flux density Br of the resin composition for bonded magnets according to the present embodiment is preferably 300 mT (3000 G) or more and more preferably 350 mT (3500 G) or more. The coercive force iHc is preferably 636 to 955 kA/m (8000 to 12000 Oe) and more preferably 676 to 915 kA/m (8500 to 11500 Oe). The maximum energy product (BH)max is preferably 15.9 kJ/m³ (2.00 MGOe) or more and more preferably 19.9 kJ/m³ (2.50 MGOe) or more.

Next, a method for producing the resin composition for bonded magnets according to the present embodiment will be described.

The resin composition for bonded magnets according to the present embodiment can be obtained by a known production method of a resin composition for bonded magnets. For example, a magnetic powder, a PPS resin component, and a hydrotalcite powder are first uniformly mixed and then melt-kneaded using a kneading extruder or the like. Then, the obtained kneaded product is pulverized or cut into particles or pellets to obtain a resin composition for bonded magnets.

The resin composition for bonded magnets according to the present embodiment may appropriately include a lubricant for plastic molding, various stabilizers, and the like in order to obtain, for example, effects such as improvement in moldability, improvement in heat resistance, prevention of oxidation degradation, and rust prevention.

Examples of the lubricant include saturated and unsaturated fatty acids such as propionic acid, stearic acid, linoleic acid, oleic acid, malonic acid, glutaric acid, adipic acid, maleic acid, and fumaric acid as well as derivatives thereof. Examples of the derivatives include metal soaps such as calcium stearate, magnesium stearate, and lithium stearate and fatty acid amides such as hydroxystearic acid amide, ethylene bislauric acid amide, and ethylene bisoleic acid amide. Further examples include waxes such as paraffin wax, polysiloxanes such as dimethylpolysiloxane and silicon oil, and fluorine compounds such as fluorine-containing oil.

As the stabilizer, an antioxidant is preferably added in order to suppress deterioration attributable to heat. An example of the antioxidant is a hindered aminebased stabilizer. Other examples include hindered/less-hindered phenol-based antioxidants such as pentaerythrityl-tetrakis[3-(3,5-di-t-butyl-4-hydroxyphenyl)propionate], metal deactivators such as N,N'-bis[3-(3,5-di-t-butyl-4-hydroxyphenyl)propionylhydrazine, phosphite-based antioxidants, and thioether-based antioxidants. In particular, a combination of a hindered/less-hindered phenol-based antioxidant and a phosphite-based antioxidant or a metal deactivator is effective.

The antioxidant is contained in an amount of preferably 0.1 to 1.0 wt% and more preferably 0.2 to 0.8 wt% relative to the total amount of the resin composition.

Further, a known mold release agent such as zinc stearate or calcium stearate can be added to the resin as necessary.

A molding method for obtaining a molded article using the resin composition for bonded magnets according to the present embodiment is not particularly limited. Any known methods such as a transfer method, an injection method, an extrusion method, an inflation method, a calendering method, a T-die method, a blowing method, a vacuum method, a lamination method, a spray-up method, a foaming method, a matched die method, and an SMC method can be used according to the material properties, molding purpose, application, and the like of the resin composition for bonded magnets. Among these methods, a plurality of methods can be used in combination. In particular, a preferred molding method of the resin composition for bonded magnets using thermoplastic resin is an injection method or an extrusion method. These molding methods have been applied to many of industrial components. Further, these molding methods enable continuous, high-speed, and mass production.

### EXAMPLES

Representative examples of the present embodiment will be described below, but the present embodiment is not limited to these examples.

The average particle diameter of the ferrite particle powder used in the present embodiment was measured using a "Sub-Sieve Sizer Model 95" (manufactured by Fisher Scientific).

The BET specific surface area of the ferrite particle powder used in the present embodiment was measured using a "full automatic specific surface area meter Macsorb model-1201" (manufactured by Mountech Co., Ltd.).

The plate surface diameter of the hydrotalcite powder was measured from a transmission electron micrograph of an observation sample. The average value of the measured numerical values was defined as the average plate surface diameter of the hydrotalcite powder. The used transmission electron microscope was a "JEM-1200EX II (manufactured by JEOL Ltd.)". A solution that contains the hydrotalcite powder dispersed in water or alcohol was poured onto a mesh. The particles attached to the mesh were dried to prepare an observation sample. In the observation sample, particles (200 points) of which plate surfaces were horizontally attached to the mesh were selected. The plate surface diameters of the selected particles were measured.

The BET specific surface area value of the hydrotalcite powder was measured using a "Monosorb MS-21 (manufactured by QUANTA CHROME)".

The generation amount of corrosive gas of the resin composition for bonded magnets was measured by the following method. First, as pretreatment adjustment, 1 g of the resin composition for bonded magnets was heated for 10 minutes using a tabletop high-temperature tubular furnace TSS-430P manufactured by Yamada Denki Co., Ltd. set at 350°C (air atmosphere), thereby to generate gas. Only the generated gas was guided into the tubular furnace set at 1000°C and burned. The thus-ionized generated gas was absorbed into two absorbent sets (absorbent make-up: 0.05 M NaOH + 0.06% H₂O₂ aqueous solution 20 ml/set). Thereafter, Cl⁻ and SO₄²⁻ were quantified by an ion chromatography Dionex Integrion HPIC system manufactured by Thermo Fisher Scientific K. K. with an absorbent diluted to 100 mL.

The molding density of the resin composition for bonded magnets was determined using an "electronic hydrometer EW-120SG" (manufactured by Yasuda Seiki Seisakusho, Ltd.). Specifically, the molding density of a core obtained by molding the resin composition for bonded magnets melted in a mold having a diameter of 25 mm and a height of 10.5 mm was measured by an electronic hydrometer.

The melt mass flow rate (MFR) of the bonded magnet composition was determined by measuring the bonded magnet composition melted at 330°C under a load of 10 kg in accordance with JIS K 7210.

The magnetic properties (residual magnetic flux density Br, coercive force iHc, coercive force bHc, maximum energy product (BH)max) of the resin composition for bonded magnets were determined by the following method. First, the resin composition for bonded magnets was melted in a mold having a diameter of 25 mm and a height of 10.5 mm and then subjected to magnetic field orientation at 716.2 kA/m (9 kOe). Thereafter, the magnetic properties of the resin composition for bonded magnets were measured in a magnetic field of 1114.1 kA/m (14 kOe) using a "direct current magnetization properties automatic recording device 3257" (manufactured by Yokogawa Hokushin Electric Corporation).

Using an injection molding machine J55AD type manufactured by The Japan Steel Works, Ltd., the resin composition for bonded magnets was injection-molded to obtain a test piece molded body having a total length of 80 mm, a total width of 12.7 mm, and a thickness of 3.2 mm. On the basis of the recorded injection pressure during the injection molding of the test piece, the injectability of the resin composition for bonded magnets was decided.

The bending strength and IZOD impact strength of the molded body using the resin composition for bonded magnets were measured in accordance with ASTM D790 and D256 standards. More specifically, a test piece molded body was obtained using an injection molding machine J55AD type manufactured by The Japan Steel Works, Ltd. Thereafter, the bending strength and the IZOD impact strength of the test piece molded body were measured using a computer measurement control-type precision universal testing machine AG-1 type manufactured by Shimadzu Corporation and a NO. 158 manufactured by Yasuda Seiki Seisakusho, Ltd.

### Example 1

To 83.57 parts by weight of a ferrite particle powder (average particle diameter: 1.20 µm, BET value: 1.75 m²/g, coercive force: 226 kA/m (2850 Oe), saturation magnetization: 822 Am²/kg (72 emu/g)), 0.42 part by weight of an aminoalkyl-based silane coupling agent was added. The resulting mixture was warmed and mixed at 120°C until it was homogeneous. In this way, a surface-treated ferrite particle powder was obtained. To this surface-treated ferrite particle powder, 15.80 parts by weight of a PPS resin (average molecular weight: 41000, melt viscosity: 60 Pa·s at 310°C) and 0.21 part by weight of an Mg-Al-based hydrotalcite powder (average plate surface diameter: 0.24 µm, BET value: 11 m²/g) were added. The obtained mixture was sufficiently mixed by a Henschel mixer to obtain a mixture of a resin composition for bonded magnets.

The obtained mixture of the resin composition for bonded magnets was fed in a fixed amount to a twin-screw kneader and kneaded at a temperature at which the PPS resin was melted. The kneaded product was taken out into a strand shape and cut into pellets having a size of 2 mmΦ × 3 mm. In this way, a resin composition for bonded magnets was obtained.

The make-up of the obtained resin composition for bonded magnets and the generation amount of corrosive gas (Cl⁻ and SO₄²⁻) were measured. The measurement results, molding density, MFR, and magnetic properties are illustrated in Table 2.

The injection pressure during injection molding of the resin composition for bond magnets and the bending strength and IZOD impact strength of the test piece molded body obtained by the injection molding were measured. The measurement results are illustrated in Table 3.

### Examples 2 to 3 and Comparative Examples 1 to 2

A resin composition for bonded magnets was prepared in the same manner as in Example 1, except that the formulations of the ferrite magnetic powder, the PPS resin, and the hydrotalcite powder were changed as illustrated in Table 1.

### Example 4

A resin composition for bonded magnets was prepared in the same manner as in Example 2, except that the hydrotalcite powder was changed to an Mg-Al-based hydrotalcite powder having an average plate surface diameter of 0.06 µm and a BET value of 40 m²/g.

**[Table 1]**

| Item | Unit | Example 1 | Example 2 | Example 3 | Example 4 | Comparative Example 1 | Comparative Example 2 |
|---|---|---|---|---|---|---|---|
| PPS resin | wt% | 15.80 | 15.80 | 15.80 | 15.80 | 15.80 | 15.80 |
| Hydrotalcite-1 | wt% | 0.21 | 0.43 | 0.84 | - | - | 4.19 |
| Hydrotalcite-2 | wt% | - | - | - | 0.43 | - | - |
| Ferrite magnetic powder | wt% | 83.57 | 83.35 | 82.95 | 83.35 | 83.78 | 79.60 |
| Silane coupling agent | wt% | 0.42 | 0.42 | 0.41 | 0.42 | 0.42 | 0.41 |

**[Table 2]**

| Item | | Unit | Example 1 | Example 2 | Example 3 | Example 4 | Comparative Example 1 | Comparative Example 2 |
|---|---|---|---|---|---|---|---|---|
| Make-up | Hydrotalcite /PPS resin | wt% | 1.3 | 2.7 | 5.3 | 2.7 | 0 | 26.5 |
| | Hydrotalcite/resin composition for bonded magnets | wt% | 0.21 | 0.43 | 0.84 | 0.43 | - | 4.19 |
| | PPS resin/resin composition for bonded magnets | wt% | 15.80 | 15.80 | 15.80 | 15.80 | 15.80 | 15.80 |
| Corrosive gas | Cl⁻ ion detection amount | ppm/g | 9 | 5 | 0 | 0 | 80 | 0 |
| | SO4²⁻ ion detection amount | ppm/g | 0 | 0 | 0 | 0 | 150 | 0 |
| Molding density | | g/cm³ | 3.49 | 3.50 | 3.50 | 3.51 | 3.48 | 3.50 |
| MFR | | g/10 min | 185 | 188 | 195 | 149 | 198 | 114 |
| Magnetic properties | Br | G | 2550 | 2550 | 2540 | 2560 | 2520 | 2400 |
| | | mT | 255 | 255 | 254 | 256 | 252 | 240 |
| | bHc | Oe | 2250 | 2210 | 2190 | 2250 | 2200 | 2200 |
| | | kA/m | 179 | 176 | 174 | 179 | 175 | 175 |
| | iHc | Oe | 2840 | 2740 | 2700 | 2830 | 2810 | 2720 |
| | | kA/m | 226 | 218 | 215 | 225 | 224 | 216 |
| | (BH)max | MGOe | 1.62 | 1.62 | 1.61 | 1.64 | 1.58 | 1.45 |
| | | kJ/m³ | 12.9 | 12.9 | 12.8 | 13.1 | 12.6 | 11.5 |

**[Table 3]**

| Item | Unit | Example 1 | Example 2 | Example 3 | Example 4 | Comparative Example 1 | Comparative Example 2 |
|---|---|---|---|---|---|---|---|
| Injection pressure | MPa | 160 | 162 | 160 | 167 | 150 | 200 |
| Bending strength | MPa | 122 | 111 | 101 | 111 | 127 | 67 |
| IZOD Impact strength (no notch) | kJ/m² | 9.2 | 7.8 | 7.0 | 10.0 | 9.4 | 4.2 |

It was confirmed that the resin composition for bonded magnets according to the present embodiment had more excellent corrosive gas reducing properties than the resin composition for bonded magnets of Comparative Example 1 which did not include the hydrotalcite powder. It is noted that in the resin composition for bonded magnets of Comparative Example 2, a high injection pressure and a decrease in bending strength and IZOD impact strength of the molded body were observed.

### INDUSTRIAL APPLICABILITY

With the resin composition for bonded magnets according to the present embodiment, there can be obtained a molded article capable of reducing generation of corrosive gas while maintaining high magnetic force properties and physical properties. Therefore, the resin composition for bonded magnets according to the present embodiment can be suitably used as a material for bonded magnets.

## Claims

1. A resin composition for bonded magnets comprising:
a magnetic powder;
a PPS resin; and
a hydrotalcite powder,
wherein hydrotalcite is contained in an amount of 0.1 to 25.0 wt% relative to the PPS resin.

2. The resin composition for bonded magnets according to claim 1, containing 5 to 30 wt% of the PPS resin.

3. The resin composition for bonded magnets according to claim 1 or 2, containing 0.01 to 4.0 wt% of the hydrotalcite.

4. The resin composition for bonded magnets according to claim 1 or 2,
wherein the hydrotalcite powder is an Mg-Al-based hydrotalcite.

5. A molded body that is molded using the resin composition for bonded magnets according to claim 1 or 2.

## Patentansprüche

1. Harzzusammensetzung für geklebte Magnete, umfassend:
ein Magnetpulver;
ein PPS-Harz; und
ein Hydrotalcitpulver,
wobei Hydrotalcit in einer Menge von 0,1 bis 25,0 Gew.-%, bezogen auf das PPS-Harz, enthalten ist.

2. Harzzusammensetzung für geklebte Magnete nach Anspruch 1, enthaltend 5 bis 30 Gew.-% des PPS-Harzes.

3. Harzzusammensetzung für geklebte Magnete nach Anspruch 1 oder 2, enthaltend 0,01 bis 4,0 Gew.-% des Hydrotalcits.

4. Harzzusammensetzung für geklebte Magnete nach Anspruch 1 oder 2,
wobei das Hydrotalcitpulver ein Mg-Al-basiertes Hydrotalcit ist.

5. Formkörper, der unter Verwendung der Harzzusammensetzung für geklebte Magnete nach Anspruch 1 oder 2 geformt ist.

## Revendications

1. Composition de résine pour aimants liés comprenant :
une poudre magnétique ;
une résine PPS ; et
une poudre d'hydrotalcite ;
dans laquelle l'hydrotalcite est contenue en une quantité de 0,1 à 25,0 % en poids par rapport à la résine PPS.

2. Composition de résine pour aimants liés selon la revendication 1, contenant 5 à 30 % en poids de la résine PPS.

3. Composition de résine pour aimants liés selon la revendication 1 ou 2, contenant 0,01 à 4,0 % en poids de l'hydrotalcite.

4. Composition de résine pour aimants liés selon la revendication 1 ou 2,
dans laquelle la poudre d'hydrotalcite est une hydrotalcite à base de Mg-Al.

5. Corps moulé qui est moulé en utilisant la composition de résine pour aimants liés selon la revendication 1 ou 2.
